# FASCICULE DE BREVET EUROPEEN

(11) **EP 3 562 355 B1**
(45) Date de publication et mention de la délivrance du brevet: **14.08.2024**
(21) Numéro de dépôt: 16831507.5
(22) Date de dépôt: 28.12.2016
(51) Int. Cl.: A47G 19/02, A47G 19/12, A47G 19/22, B65D 81/00, A47J 36/24, B28B 1/26

(54) **ARTICLE DE VAISSELLE EN CÉRAMIQUE PORTANT UNE CHARGE MINÉRALE**
KERAMISCHER GESCHIRRARTIKEL MIT EINEM MINERALFÜLLSTOFF
CERAMIC TABLEWARE ARTICLE HAVING A MINERAL FILLER

(43) Date de publication de la demande: 06.11.2019
(73) Titulaire: Renaud, Chantal, 92340 Villeneuve la Garenne (FR)
(72) Inventeur: Renaud, Chantal, 92340 Villeneuve la Garenne (FR)
(74) Mandataire: Cabinet Camus Lebkiri
(86) Numéro de dépôt international: PCT/FR2016/053677
(87) Numéro de publication internationale: WO 2018/122471

(56) Documents cités:
- WO-A1-2006/101643
- WO-A1-2016/069349
- GB-A- 2 522 207
- US-A- 2 839 209
- US-A- 5 901 699

## Description

### Domaine de l'invention

La présente invention concerne le domaine des arts de la table et plus précisément des articles de vaisselle en céramique, et plus particulièrement en porcelaine ou en faïence. Il s'agit d'articles tels que des assiettes, des plats de service, des saucières, des coupes, des tasses, bols, théière ou mugs...

De tels articles de vaisselles ont l'inconvénient de refroidir rapidement les aliments qu'ils contiennent car ils présentent une surface d'échange thermique importante avec l'air environnant d'une part et les aliments qu'ils contiennent d'autre part, et une conductivité thermique faible de la céramique, généralement de la porcelaine ou de la faïence. Ce constat a conduit à proposer différentes solutions pour améliorer le maintien de la température des plats.

### Etat de la technique

On connaît la demande de brevet US2014041647 qui décrit un plat ayant une zone de chauffage intégrée, utilisé pour garder les aliments et les boissons au chaud, rendant la nourriture et des boissons plus agréable à manger ou à boire. La zone de chauffage intégrée utilise un matériau à changement de phase (PCM) tel qu'une solution sursaturée d'acétate de sodium.

On connaît aussi le brevet US7176426 décrivant un dispositif intégrant un absorbeur de chaleur à micro-ondes et libérant cette énergie sous forme de chaleur (rayonnement infrarouge) sur une longue période de temps (typiquement 20 à 30 minutes. Ce dispositif comporte trois éléments rigides, l'élément supérieur généralement sous la forme d'un récipient, tel qu'un plat ou une tasse coopérant avec un socle pour former une enceinte étanche ou cavité.

Ce réceptacle est transparent aux micro-ondes et qui entoure une masse solide de matériau d'absorption de chauffage en contact minimal avec les parois de la cavité micro-ondes.

Ce réceptacle et le matériau d'absorption de micro-ondes peuvent avoir des sections transversales différentes, les formes, les volumes et les masses selon l'utilisation particulière prévue de l'appareil de stockage de chaleur.

Le brevet US4505252 décrit un autre exemple de plat creux avec un noyau formé par une base de cire et comprenant des éléments supérieur et inférieur soudés les uns aux autres à leur périphérie, avec un noyau en cire fusible confiné à l'intérieur d'une cavité.

Un autre article de vaisselle est connu du document WO2006101643.

### Inconvénients de l'art antérieur

Les solutions de l'art antérieur ne sont pas très satisfaisantes. Les plats intégrant un matériau à changement de phase ne permettent pas la fabrication selon les techniques traditionnelles de la faïencerie, impliquant une cuisson à des températures élevées provoquant la vaporisation des matériaux tels que la cire.

D'autres solutions nécessitent la combinaison de plusieurs éléments, ce qui n'est pas compatible avec les habitudes en matière de service tant dans un contexte de repas familiale que dans la restauration.

### Solution apportée par l'invention

La présente invention vise à remédier à ces inconvénients en proposant un article de vaisselle pouvant être utilisé d'une manière totalement identique à celle d'un article d'art de la table traditionnel tout en limitant le refroidissement des aliments qu'il contient, et permettant une fabrication selon les techniques usuelles du domaine de la porcelaine et de la faïence.

A cet effet, l'invention concerne selon son acception la plus générale un article de vaisselle en céramique avec les caractéristiques selon la revendication 1.

L'article peut par ailleurs présenter l'une et/ou l'autre des caractéristiques suivantes :
- le moyen passif d'accumulation thermique comprend un premier matériau susceptible de s'échauffer lorsqu'exposé à une source d'énergie, ladite source d' énergie à laquelle le matériau est sensible comprend préférentiellement des micro-ondes, des ondes électromagnétiques, la chaleur d'une étuve.
- le matériau s'échauffant lorsqu'exposé à une source d'énergie est disposé sur la surface supérieure de la coque inférieure de l'article constituant la paroi de fond de la cavité interne
- le matériau s'échauffant lorsqu'exposé à une source d'énergie présente une forme générale de feuille ou feuillard et/ou présente une épaisseur inférieure à 1 mm, de préférence inférieure à 500 microns, de préférence inférieure à 200 microns, de préférence inférieure à 50 microns, de préférence inférieure à 20 microns, de préférence inférieure à 10 microns.
- le matériau s'échauffant lorsqu'exposé à une source d'énergie est appliqué sur la surface interne de la coque de l'article par sérigraphie, ou résulte d'un transfert à partir d'un chromo ou d'une décalcomanie.
- le matériau s'échauffant lorsqu'exposé à une source d'énergie est métallique
- le matériau de stockage de la chaleur dégagée est disposé au dessus du matériau s'échauffant lorsqu'exposé à une source d'énergie afin que le matériau de stockage de la chaleur s'interpose entre la coque et le matériau s'échauffant lorsqu'exposé à une source d'énergie
- il comprend un moyen de séparation physique du matériau de stockage de la chaleur dégagée vis à vis du matériau s'échauffant lorsqu'exposé à une source d'énergie évitant un contact direct entre les deux matériaux
- le moyen d'isolation est une enveloppe de protection du matériau de stockage de la chaleur dégagée
- il comprend une barrière thermique disposée entre le matériau s'échauffant lorsqu'exposé à une source d'énergie et la coque de l'article
- il comprend au sein de la cavité interne un capteur de mesure de poids résistant aux températures de chauffe

Selon une variante de réalisation, l'article est formé par une unique coque en céramique et présentant la forme générale d'un bloc

Selon une autre variante de réalisation, l'article est formé par l'assemblage de deux coques en céramique complémentaires et superposables formant dans leur configuration superposée une cavité interne logeant le moyen d'accumulation thermique, les deux coques définissant deux rebords périphériques de scellement disposés en regard l'un de l'autre et s'étendant sur la paroi latérale de l'article en étant séparés l'un de l'autre par un espace de communication annulaire, l'article comprenant une couronne de scellement des deux coques l'une à l'autre, constituée d'un matériau thermodurcissable, s'interposant entre les rebords de scellement dans l'espace annulaire en affleurement des parois externes des coques.

De préférence, :
- la couronne de scellement présente une hauteur supérieure à 100 microns, 500 microns, 1 mm.
- la couronne de scellement présente une hauteur inférieure à 2 mm
- la couronne de scellement est constituée de résine époxy

L'invention concerne un article à deux coques présentant la forme générale d'une assiette, d'une théière, d'une tasse ou d'un verre, avec les caractéristiques des revendications 12 ou 13.

L'invention concerne un procédé de fabrication selon la revendication indépendante 14 d'un article à une coque conforme à la revendication 11 comprenant les étapes de :
- formation de la coque en céramique par coulage de la barbotine au sein d'un moule de la forme à réaliser formant une cavité en forme de bloc à travers un orifice,
- durcissement de la barbotine en contact de la paroi du moule alors que la barbotine du coeur du moule reste malléable alors que l'enveloppe externe de barbotine a durci
- au bout d'un temps prédéterminé en fonction de l'épaisseur de coque de barbotine à atteindre, vidage de la barbotine du coeur du moule alors qu'elle est restée malléable, par l'orifice,
- séchage, cuisson de la coque et émaillage de la paroi externe et interne de l'enveloppe de la coque
- injection d'un matériau d'accumulation thermique sous forme visqueuse ou liquide à travers l'orifice de la coque
- bouchage de l'orifice par un matériau compatible avec le contact alimentaire, sous forme de résine ou de bouchon solide en polymère.

Idéalement, le bouchage de l'orifice peut s'effectuer par coulage de barbotine supplémentaire d'une quantité prédéterminée permettant juste de reboucher l'orifice, apposition d'un pansement obturant l'orifice, tel qu'un plâtre, puis mise en rotation de l'enveloppe de barbotine de façon à ce que la barbotine dernièrement coulée comble l'orifice dans son épaisseur.

L'invention concerne également un procédé de fabrication d'un article à deux coques selon la revendication 14, comprenant les étapes de :
- fabrication, cuisson et émaillage de deux coques séparément l'une de l'autre, les coques étant en céramique, complémentaires et superposables, formant dans leur configuration superposée une cavité interne logeant le moyen d'accumulation thermique, les deux coques définissant respectivement deux rebords périphériques de scellement disposés en regard l'un de l'autre
- disposition sur la paroi supérieure de l'une des deux coques destinée à former la paroi de fond de la cavité de l'article, du moyen d'accumulation thermique
- application sur le rebord périphérique de scellement de la coque supportant le moyen d'accumulation thermique d'un matériau thermodurcissable à l'état non durci, dans une quantité prédéterminée en fonction de la hauteur de la couronne de scellement à former
- application du rebord périphérique de scellement de l'autre coque sur le matériau de scellement à l'état non durci
- scellement des deux coques l'une à l'autre par durcissement ou polymérisation du matériau de scellement et constitution de la couronne de scellement, de préférence à température ambiante ou par chauffage entre 100 et 120°C.

Lorsque le matériau s'échauffant lorsqu'exposé à une source d'énergie est un chromo, le procédé de fabrication comprend une étape de cuisson de la coque sur laquelle le chromo est appliqué, visant à obtenir une parfaite adhésion du chromo sur l'ensemble de la surface de ladite coque, le chromo épousant la surface de la coque, pratiquée de préférence à une température comprise entre 730°C et 280°C durant un temps compris entre 10 et 40 minutes, avant l'étape de scellement des deux coques l'une à l'autre.

### Description détaillée d'un exemple non limitatif de réalisation de l'invention

La présente invention sera mieux comprise à la lecture de la description qui suit, se référant à des exemples non limitatifs de réalisation illustrés par les dessins annexés où :
- la figure 1 représente une vue mixte de côté et en coupe longitudinale d'une vue éclatée fictive d'une assiette selon l'invention selon une variante de réalisation à deux coques assemblées par un moyen de scellement,
- la figure 2 représente une vue en perspective d'une théière selon l'invention réalisée en deux coques assemblées par un moyen de scellement
- la figure 3 représente une vue en coupe de la théière de la figure 2
- les figures 4 à 6 représentent respectivement :
   * une vue en perspective d'une tasse à soucoupe selon l'invention, réalisée en deux coques assemblées par un moyen de scellement (figure 4),
   * une vue en coupe de la soucoupe de l'article de la figure 4
   * une vue en coupe de la tasse de l'article de la figure 4
- les figures 7 et 8 représentent une tasse selon l'invention, réalisé en deux coques assemblées par un moyen de scellement respectivement par :
   * une vue en perspective (figure 7),
   * une vue en coupe (figure 8)
- la figure 9 représente par une vue en coupe, un article de vaisselle selon l'invention, réalisé en une unique coque refermée par un moyen de scellement.

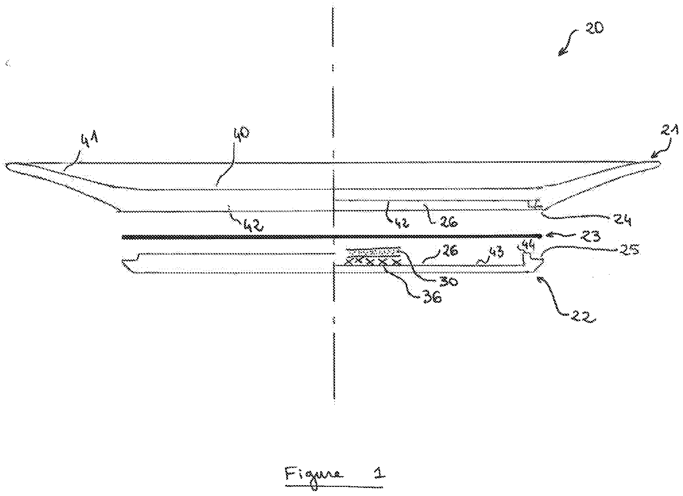

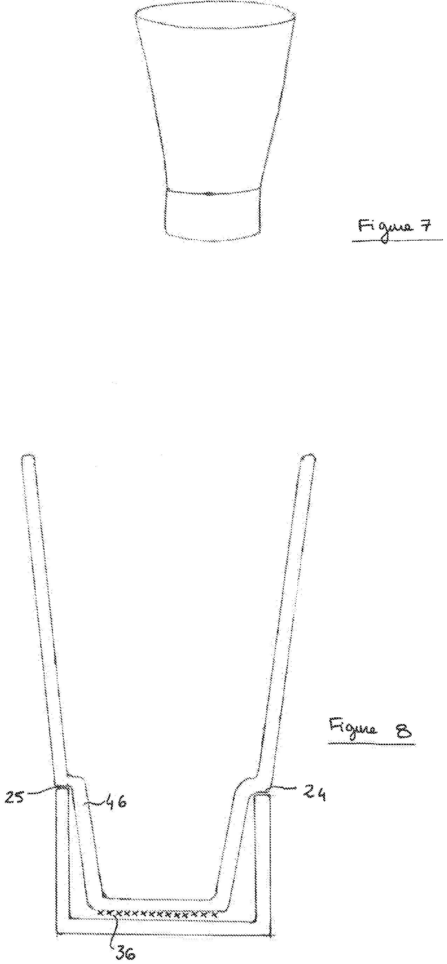

Les exemples de réalisation de l'invention illustrés sur les figures 1 à 8 représentent un premier mode de réalisation dans lequel l'article de vaisselle 20 selon l'invention est constitué par l'assemblage de deux coques en céramiques 21, 22 par l'intermédiaire d'une couronne de scellement 23 constituée d'un matériau thermodurcissable, qui est interposé à l'état non durci entre les rebords en regard 24, 25 des deux coques, en étant appliqué en quantité prédéterminée afin de conférer à la couronne formée après durcissement du matériau, une hauteur significative (plusieurs centaines de microns, de préférence au moins un millimètre voire plusieurs millimètres) en étant en parfait affleurement de la paroi externe des deux coques assemblées 21, 22.

Si lors de l'assemblage, le matériau de scellement forme des bavures, ce surplus est ébavuré par passage appuyé le long de la paroi externe des coques au niveau du matériau non durci, d'un élément de nettoyage dudit matériau (par exemple un tampon imprégné d'acétone lorsque le matériau est de la résine époxy), ébavurage participant à l'affleurement parfait de la couronne formée après durcissement du matériau de scellement, avec la paroi externe des coques.

La quantité de matériau de scellement à appliquer pourra être calibrée suite à des essais expérimentaux afin de garantir l'obtention d'une couronne de scellement de hauteur désirée, sans bavure et en affleurement parfait des parois externes des deux coques. Dans ce cas, le matériau de scellement à l'état non durci pourra être appliqué de façon automatisée par un pistolet avec la juste quantité calibrée.

L'invention réalise ainsi de façon simple, rapide et fiable, la fabrication d'un article de vaisselle doté d'une cavité interne 26 résultant de l'assemblage des deux coques, pouvant accueillir différents types d'éléments aux fonctionnalités différentes (accumulation thermique, capteurs de mesure de masse) donnant l'aspect d'un article constitué d'une seule et unique pièce et ainsi dépourvu d'interstices où se logeraient des impuretés tout en étant pourtant formé d'un assemblage de différentes pièces.

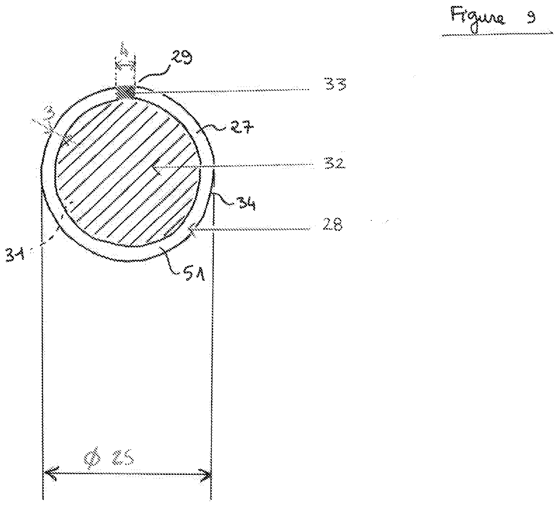

Selon le mode de réalisation représenté sur la figure 9, l'article est cette fois constitué d'une coque unique 27, formant un bloc creux 28 (ici sphérique), et dotée d'un orifice 29 de communication entre sa cavité interne 31 et l'extérieur, à travers lequel pourront être injectés sous forme liquide ou visqueuse des éléments aux fonctionnalités diverses 32 (accumulation thermique, mesure de masse). De la même façon que pour le mode de réalisation à deux coques, l'orifice 29 est scellé par un matériau thermodurcissable une fois les éléments insérés dans la cavité, apporté en quantité prédéterminée, afin de former un bouchon de scellement 33 en parfait affleurement de la paroi externe 34 de la coque répondant à des exigences en matière sanitaires, fonctionnelles et esthétiques inédites.

De la même façon, la quantité de matériau de scellement à appliquer à l'état non durci pourra être calibrée suite à des essais expérimentaux pour garantir l'obtention d'un bouchon de scellement en affleurement parfait de la paroi externe de la coque, et sans bavure.

Pour toutes les variantes de réalisation, parmi les éléments pouvant être insérés dans la cavité, et assurant la fonction d'accumulateurs thermiques, on compte un matériau susceptible de s'échauffer lorsqu'exposé à une source d'énergie 36.

Idéalement ce matériau sera métallique, mais pourra tout autant comprendre une charge minérale, éventuellement incluse au sein d'une résine, ou se présenter sous la forme d'un gel, ou un mélange de ces matériaux.

Ce matériau qui s'échauffe pourra en outre être séparé de la coque supérieure par un matériau emmagasinant la chaleur et/ou assurant une légère isolation de la coque supérieure vis à vis du matériau qui s'échauffe.

Lorsque le matériau s'échauffant lorsqu'exposé à une source d'énergie se présente sous la forme d'un gel, celui ci pourra avantageusement être disposé au sein d'une enveloppe hermétique susceptible d'assurer la fonction de contenir hermétiquement ce gel y compris en cas de casse de l'article, et de séparation physique de ce gel vis à vis d'un autre matériau susceptible de s'échauffer notamment métallique.

La présence d'une enveloppe de contenu du gel sera préconisée dans le mode de réalisation à deux coques pour contenir ce gel au sein de la coque inférieure avant l'assemblage avec la coque supérieure.

Pour des applications de maintien d'un aliment en température élevée, ce gel pourra être constitué de paraffine.

Pour des applications de réfrigération d'un aliment, d'une boisson, ce gel pourra être constitué de chlorures ou de sels minéraux.

La présence d'une enveloppe sera également préconisée lorsqu'un autre matériau qui s'échauffe rapidement, typiquement métallique, sera également prévu dans la cavité pour éviter un contact direct avec le gel.

Il est en effet avantageux selon l'invention et pour toutes les variantes de réalisation de celle ci, de prévoir que le moyen d'accumulation thermique comprenne plusieurs matériaux distincts : l'un s'échauffant rapidement lorsqu'exposé à une source d'énergie, et l'autre emmagasinant la chaleur du premier.

Cette association de matériaux est particulièrement avantageuse lorsque le matériau s'échauffant rapidement présente une conductivité thermique élevée l'empêchant de stocker durablement la chaleur, notamment un matériau métallique.

On couplera donc de manière avantageuse mais non obligatoire, un matériau métallique à un matériau de stockage de chaleur 30, ce dernier matériau de stockage de chaleur pouvant être constitué d'un gel idéalement protégé du métal par une enveloppe, ou d'une résine dotée de charges minérales et non obligatoirement séparée du métal car moins susceptibles de bruler au contact direct de celui ci.

Le matériau métallique sera avantageusement choisi pour permettre un échauffement par induction, par micro ondes ou par chauffage en étuve.

Ce matériau métallique sera avantageusement de l'argent.

La forme préférée de ce matériau lorsqu'il est métallique sera celle d'une pellicule ou d'un motif de très faible épaisseur (par exemple inférieure à 500 microns, de préférence inférieure à 400, 300, 200, 100, 50, 20, 10 microns) pour limiter son échauffement thermique par induction ou par micro onde.

Idéalement, et notamment dans le mode de réalisation à deux coques, ce matériau sera appliqué par transfert à partir d'un chromo ou décalcomanie d'une feuille ou d'un motif métallique. Le chromo utilisé selon l'invention à l'intérieur de l'article de vaisselle sans ainsi être visible de l'extérieur, peut être constitué par un chromo métallique utilisé en céramique usuellement sur la surface externe d'un article de vaisselle.

Cette feuille ou motif métallique sera avantageusement appliquée sur la face supérieure de la coque inférieure 22 de l'article, afin d'être la plus éloignée possible de la paroi de l'article au contact de l'aliment et d'éviter ainsi une « recuisson » de celui ci. Ou au contraire, appliqué sur la face inférieure de la coque supérieure pour permettre un maintien au chaud plus long des aliments.

L'article pourra comprendre une barrière thermique avantageusement constituée de feutre polyester, ou de liège, ou de papier en laine synthétique, ou de laine de roche, ou de fibre isolante bio soluble, ou bien encore de vermiculite qui s'interposera entre le matériau s'échauffant lorsqu'exposé à une source d'énergie, et le matériau de stockage de la chaleur (la coque constitutive de l'article afin d'éviter toute brulure. Notamment, cette barrière pourra être interposée entre le matériau métallique et la coque inférieure dans le cas d'un article à deux coques).

Un article optimal à plusieurs matériaux pourra comprendre dans sa cavité en partant de la coque inférieure jusqu'à la coque supérieure :
- éventuellement une barrière thermique de protection contre les brûlures, pouvant être constituée par la céramique constitutive de la coque ou par un élément rapporté
- le matériau s'échauffant lorsqu'exposé à une source d'énergie, et/ou chauffable par induction idéalement métallique et se présentant alors sous la forme d'une pellicule en forme de feuille ou de motif (par exemple en spirale) de type chromo,
- le matériau isolant servant de barrière afin d'éviter le contact direct entre le matériau s'échauffant lorsqu'exposé à une source d'énergie et le matériau de stockage de la chaleur,
- le matériau de stockage de la chaleur et/ou d'isolation thermique, éventuellement contenu dans une enveloppe de protection notamment lorsqu'il se présente sous la forme d'un gel.

Des articles plus simples, « monomatériau » pourront n'inclure dans la cavité qu'un unique élément s'échauffant lorsqu'exposé à une source d'énergie, qui sera constitué d'un unique matériau de type métallique, et/ou gel et/ou résine avec charge minérale ou une combinaison de ceux ci, et éventuellement une barrière thermique.

### Exemples d'articles à deux coques

On décrit dans ce qui suit en référence aux figures 1 à 8, des exemples d'articles à deux coques assemblées par un moyen de scellement selon l'invention :

### Assiette

La coque supérieure 21 est formée d'une seule pièce comprenant une face supérieure 40 formant le fond de l'assiette, un rebord annulaire 41 et une face inférieure 42 en retrait interne vis à vis du rebord annulaire en saillie inférieure 24.

La coque inférieure 22 est formée d'une seule pièce comprenant une face supérieure 43 en retrait interne vis à vis d'un rebord interne annulaire 44 destiné à venir en butée contre la face inférieure 26 de la coque supérieure 21, et un rebord annulaire externe 25 formant le rebord de scellement. Lorsque le rebord annulaire interne 44 de la coque inférieure est en butée contre la face inférieure 26 de la coque supérieure 21, il existe un espace annulaire de quelques centaines de microns ou d'un millimètre ou de plusieurs millimètres qui est comblé par le matériau de scellement 23 interposé entre ces deux rebords de scellement 24, 25.

De façon commune à toutes les variantes de réalisation de l'article en deux coques, les deux coques sont ainsi volontairement réalisées avec un jeu mécanique axial à combler par le matériau de scellement 23 pour atteindre les dimensions de l'article à réaliser. Ce matériau de scellement étant appliqué dans un état malléable, il pourra compenser les éventuelles imprécisions de dimensionnement des deux coques une fois durci en affleurement des parois externes des deux coques.

### Théière, Tasse ou verre

La coque inférieure 22 présente la forme générale d'une coupe dont le bord frontal supérieur forme le rebord de scellement 25.

La coque supérieure 21 comprend une partie 46 présentant la forme générale d'un cône pointant vers la coupe de la coque inférieure, entouré d'un rebord formant le rebord de scellement 24 à la coque inférieure.

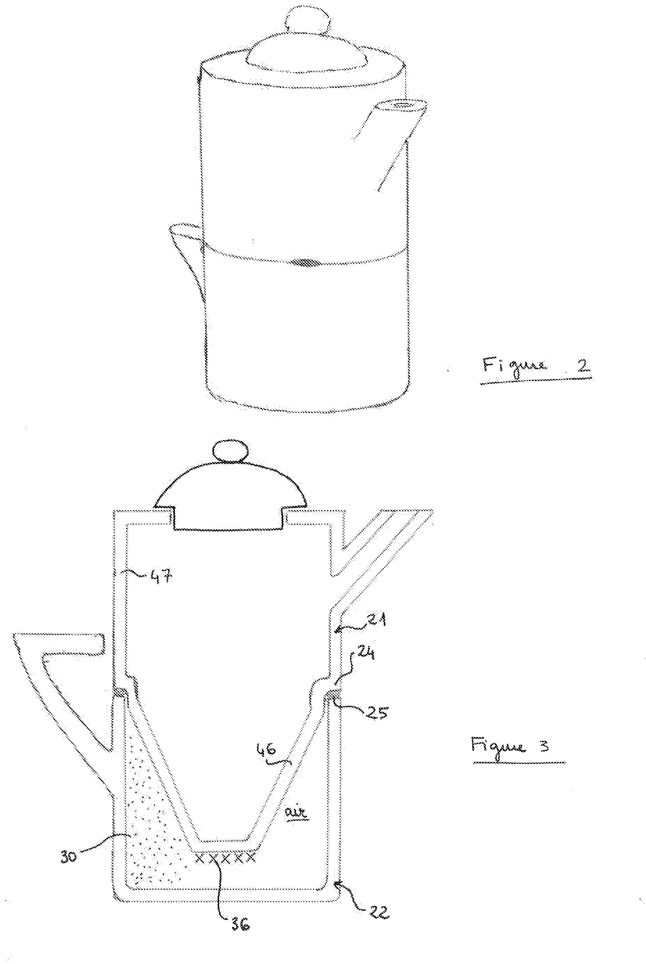

Dans le cas de la théière des figures 2 et 3, la coque supérieure comprend une partie 47 s'étendant à partir du rebord de scellement 24 à l'opposé du cône pour former la partie supérieure de la théière, avec son couvercle.

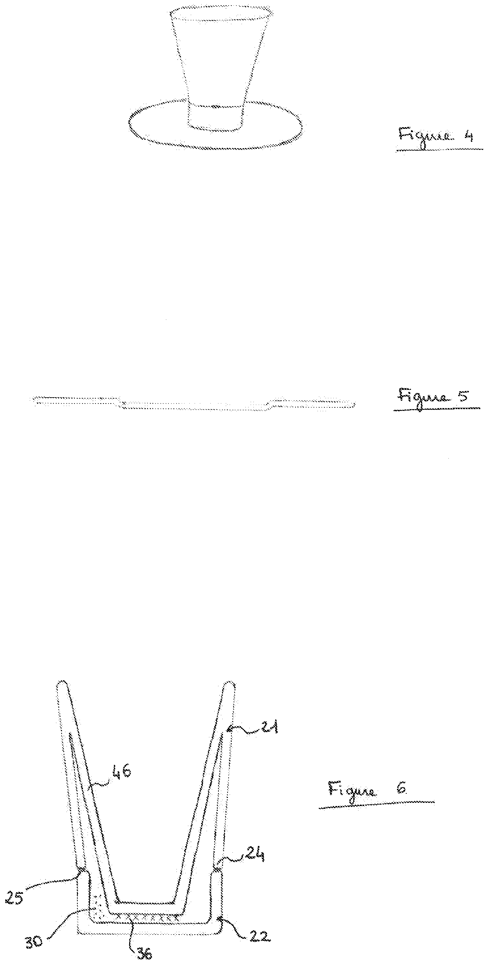

Dans le cas des tasses des figures 4 à 8, la coque supérieure 21 comprend une partie latérale 48 entourant le cône en y étant solidarisée par son rebord supérieur, et dont le bord frontal inférieur constitue le rebord de scellement à la coque inférieure 22.

Comme expliqué précédemment, les deux coques de toutes ces variantes sont dimensionnées pour qu'il existe un jeu mécanique axial permettant l'interposition du matériau de scellement entre les rebords de scellement des deux coques.

### Réalisation de l'article à deux coques

Le procédé de fabrication d'un article à deux coques du type ci-dessus comprend les étapes de :
- fabrication, cuisson et émaillage de deux coques séparément l'une de l'autre, les coques étant en céramique complémentaires et superposables, formant dans leur configuration superposée une cavité interne logeant le moyen d'accumulation thermique, les deux coques définissant respectivement deux rebords périphériques de scellement disposés en regard l'un de l'autre
- disposition sur la paroi supérieure de l'une des deux coques destinée à former la paroi de fond de la cavité de l'article, du moyen d'accumulation thermique
- application sur le rebord périphérique de scellement de la coque supportant le moyen d'accumulation thermique d'un matériau thermodurcissable à l'état non durci, dans une quantité prédéterminée en fonction de la hauteur de la couronne de scellement à former
- application du rebord périphérique de scellement de l'autre coque sur le matériau de scellement à l'état non durci
- polymérisation du matériau thermodurcissable à l'air ambiant ou par séchage pour sceller les deux coques l'une à l'autre
- le matériau de scellement pourra être constitué de résine époxy mono ou bi-composant

Lors de la fabrication des coques constitutives d'un article, il est tenu compte de la rétractation de la matière lors de la cuisson. Les cotes en cru avant cuisson de chaque élément de coque sont maximisées d'environ 13% vis à vis des cotes des éléments correspondants dans l'article fini à obtenir (cotes en cuit).

### Article à une coque / bille de refroidissement d'une boisson, type glaçon en céramique, figure 14

L'unique coque 51 forme un bloc creux fermé dont la cavité interne loge le moyen d'accumulation thermique 32 qui est inséré dans cette cavité à travers un orifice réalisé dans l'épaisseur de la coque, qui est ensuite comblé par le matériau de scellement en affleurement de la paroi externe de la coque unique. Là également, le matériau de scellement qui est appliqué dans l'orifice à l'état non durci et donc malléable/ou solide avec un bouchon plastique rentré en force, et dans une quantité prédéterminée pour permettre la formation d'un bouchon en affleurement de la paroi externe de la coque, permet de compenser les aléas de la surface externe de la coque unique.

Cet article est réalisé par un procédé comprenant les étapes de :
- formation de la coque en céramique par coulage de la barbotine au sein d'un moule de la forme à réaliser formant une cavité en forme de bloc à travers un orifice,
- durcissement de la barbotine en contact de la paroi du moule alors que la barbotine du coeur du moule reste malléable alors que l'enveloppe externe de barbotine a durci
- au bout d'un temps prédéterminé en fonction de l'épaisseur de coque de barbotine à atteindre, vidage de la barbotine du coeur du moule alors qu'elle est restée malléable, par l'orifice,
- séchage, cuisson de la coque et émaillage de la paroi externe et interne de l'enveloppe de la coque
- injection d'un matériau d'accumulation thermique sous forme visqueuse ou liquide à travers l'orifice de la coque
- bouchage de l'orifice par un matériau compatible avec le contact alimentaire, sous forme de résine ou de bouchon solide en polymère.

Idéalement, le bouchage de l'orifice peut s'effectuer par coulage de barbotine supplémentaire d'une quantité prédéterminée permettant juste de reboucher l'orifice, apposition d'un pansement obturant l'orifice, tel qu'un plâtre, puis mise en rotation de l'enveloppe de barbotine de façon à ce que la barbotine dernièrement coulée comble l'orifice dans son épaisseur.

L'un des autres avantages de ces deux variantes de réalisation où les coques ou la coque unique sont/est cuite/s avant l'introduction du noyau ou matériau d'accumulation thermique, est que ce noyau ne subit pas d'étape de cuisson à haute température. Tout au plus, il est exposé à la température de séchage du moyen de scellement (inférieure à 100°C) et à la température de maintien au chaud de l'article de vaisselle (autour de 80°C).

Cette particularité permet d'intégrer dans la cavité des éléments fonctionnels qui ne supporteraient pas les températures de cuisson de la céramique, ainsi des gels, mais également des capteurs de différents types, tels que des capteurs de température, des capteurs de mesure de masse, ...

## Revendications

1. Article de vaisselle en céramique comportant un moyen passif d'accumulation thermique (32), lequel moyen comprend un matériau susceptible de s'échauffer lorsqu'il est exposé à une source d'énergie (36), l'article de vaisselle comprenant au moins une coque en céramique (21, 22, 27) définissant une cavité interne (26, 31) logeant le moyen d'accumulation thermique (32), ladite coque définit un rebord interne (24, 25, 29) délimitant un orifice de communication entre le volume interne de la coque et l'extérieur de l'article, l'article comprenant un moyen de scellement (23, 33) de l'orifice de communication constitué d'un matériau thermodurcissable comblant l'orifice de communication en affleurement de la paroi externe de la coque, dans lequel le moyen passif d'accumulation thermique (32) comprend un matériau de stockage de la chaleur (30) dégagée par le matériau s'échauffant lorsqu'exposé à une source d'énergie (36), **caractérisé en ce que** le matériau de stockage de la chaleur (30) comprend :
- de la stéatite ou,
- une résine incluant une charge minérale ou incluant de la stéatite ou,
- un gel comprenant des chlorures .

2. Article selon la revendication 1, dans lequel la source d'énergie à laquelle le matériau (36) est sensible comprend des micro-ondes, des ondes électromagnétiques, la chaleur d'une étuve.

3. Article selon une des revendications précédentes, dans lequel le matériau s'échauffant lorsqu'exposé à une source d'énergie (36) est disposé sur la surface supérieure (43) de la coque inférieure de l'article constituant la paroi de fond de la cavité interne.

4. Article selon une des revendications précédentes, dans lequel le matériau (36) s'échauffant lorsqu'exposé à une source d'énergie présente une épaisseur inférieure à 200 microns.

5. Article selon l'une des revendications précédentes, dans lequel le matériau s'échauffant lorsqu'exposé à une source d'énergie (36) est appliqué sur la surface interne de la coque de l'article par sérigraphie, ou résulte d'un transfert à partir d'un chromo ou d'une décalcomanie.

6. Article selon l'une des revendications précédentes, dans lequel le matériau s'échauffant lorsqu'exposé à une source d'énergie (36) est métallique.

7. Article selon l'une des revendications précédentes, dans lequel le matériau de stockage de la chaleur (30) dégagée est disposé au-dessus du matériau s'échauffant lorsqu'exposé à une source d'énergie (36) afin que le matériau de stockage de la chaleur (30) s'interpose entre la coque et le matériau s 'échauffant lorsqu'exposé à une source d'énergie.

8. Article selon l'une des revendications précédentes, dans lequel il comprend un moyen de séparation physique du matériau de stockage de la chaleur (30) dégagée vis à vis du matériau s'échauffant lorsqu'exposé à une source d'énergie (36) évitant un contact direct entre les deux matériaux, dans lequel le moyen de séparation physique est une enveloppe de protection du matériau de stockage de la chaleur dégagée.

9. Article selon l'une quelconque des revendications précédentes, comprenant une barrière thermique disposée entre le matériau s'échauffant lorsqu'exposé à une source d'énergie (36) et la coque de l'article.

10. Article selon l'une quelconque des revendications précédentes, comprenant au sein de sa cavité interne un capteur de mesure de poids résistant aux températures de chauffe.

11. Article selon l'une des revendications précédentes, formé par une unique coque (27) en céramique et présentant la forme générale d'un bloc, ledit article formant préférentiellement un article du type glaçon.

12. Article selon l'une des revendications 1 à 10, formé par l'assemblage de deux dites coques (21, 22) en céramique complémentaires et superposables formant dans leur configuration superposée une cavité interne (26) logeant le moyen d'accumulation thermique (32), les deux coques (21, 22) définissant deux rebords périphériques de scellement (24, 25) disposés en regard l'un de l'autre et s'étendant sur la paroi latérale de l'article en étant séparés l'un de l'autre par un espace de communication annulaire, l'article comprenant une couronne de scellement (23) des deux coques l'une à l'autre, constituée d'un matériau thermodurcissable, s'interposant entre les rebords de scellement dans l'espace annulaire en affleurement des parois externes des coques.

13. Article selon la revendication 12 **caractérisé en ce que** la couronne de scellement (23) est constituée de résine époxy.

14. Procédé de fabrication d'un article à une coque conforme à la revendication 11, comprenant les étapes de :
• formation de la coque (27) en céramique par coulage de la barbotine au sein d'un moule de la forme à réaliser formant une cavité en forme de bloc (28) à travers un orifice,
• durcissement de la barbotine en contact de la paroi du moule alors que la barbotine du coeur du moule reste malléable,
• au bout d'un temps prédéterminé en fonction de l'épaisseur de coque de barbotine à atteindre, vidage de la barbotine du coeur du moule alors qu'elle est restée malléable, par l'orifice,
• séchage, cuisson de la coque et émaillage de la paroi externe et interne de l'enveloppe de la coque,
• injection d'un matériau d'accumulation thermique (30) sous forme visqueuse ou liquide à travers l'orifice (29) de la coque,
• bouchage de l'orifice (29) par un matériau (33) compatible avec le contact alimentaire, sous forme de résine ou de bouchon solide en polymère.

15. Procédé de fabrication d'un article à deux coques conforme à l'une quelconque des revendications 12 ou 13, comprenant les étapes de-_:
• fabrication, cuisson et émaillage de deux coques (21, 22) séparément l'une de l'autre, les coques étant en céramique complémentaires et superposables, formant dans leur configuration superposée une cavité interne (26) logeant le moyen d'accumulation thermique (32), les deux coques définissant respectivement deux rebords périphériques de scellement (24, 25) disposés en regard l'un de l'autre,
• disposition sur la paroi supérieure de l'une des deux coques destinée à former la paroi de fond de la cavité de l'article, du moyen d'accumulation thermique (32),
• application sur le rebord périphérique de scellement (24, 25) de la coque supportant le moyen d'accumulation thermique d'un matériau thermodurcissable (23) à l'état non durci, dans une quantité prédéterminée en fonction de la hauteur de la couronne de scellement à former,
• application du rebord périphérique de scellement (25, 24) de l'autre coque sur le matériau de scellement (23) à l'état non durci,
• polymérisation du matériau thermodurcissable (23) à l'air ambiant ou par séchage pour sceller les deux coques l'une à l'autre.

16. Procédé selon la revendication 15, dans lequel lorsque le matériau s'échauffant lorsqu'exposé à une source d'énergie (36) est un chromo, le procédé de fabrication comprend une étape de cuisson de la coque sur laquelle le chromo est appliqué, visant à obtenir une parfaite adhésion du chromo sur l'ensemble de la surface de ladite coque, le chromo épousant la surface de la coque, pratiquée de préférence à une température comprise entre 730°C et 280°C durant un temps compris entre 10 et 40 minutes, avant l'étape de scellement des deux coques l'une à l'autre.

## Patentansprüche

1. Keramischer Geschirrartikel mit einem passiven Wärmespeichermittel (32), wobei das Mittel ein Material umfasst, das sich erwärmen kann, wenn es einer Energiequelle (36) ausgesetzt wird, wobei der Geschirrartikel mindestens eine Keramikschale (21, 22, 27) umfasst, die einen inneren Hohlraum (26, 31) definiert, der das Wärmespeichermittel (32) aufnimmt, wobei die Schale einen inneren Rand (24, 25, 29) definiert, der eine Verbindungsöffnung zwischen dem Innenvolumen der Schale und dem Äußeren des Artikels begrenzt, wobei der Artikel ein Mittel zum Versiegeln (23, 33) der Verbindungsöffnung umfasst, das aus einem wärmehärtenden Material besteht, das die Verbindungsöffnung bündig mit der Außenwand der Schale ausfüllt, wobei das passive Wärmespeichermittel (32) ein Material zur Speicherung der Wärme (30) umfasst, die von dem sich erwärmenden Material abgegeben wird, wenn es einer Energiequelle (36) ausgesetzt wird, **dadurch gekennzeichnet, dass** das Material zur Speicherung der Wärme (30) umfasst:
- Steatit oder,
- ein Harz, das einen mineralischen Füllstoff oder Steatit enthält, oder
- ein Gel, das Chloride enthält.

2. Artikel nach Anspruch 1, bei dem die Energiequelle, auf die das Material (36) anspricht, Mikrowellen, elektromagnetische Wellen, die Wärme eines Ofens umfasst.

3. Artikel nach einem der vorhergehenden Ansprüche, bei dem das Material, das sich erwärmt, wenn es einer Energiequelle (36) ausgesetzt wird, auf der oberen Fläche (43) der unteren Schale des Artikels angeordnet ist, die die Bodenwand des Innenhohlraums bildet.

4. Artikel nach einem der vorhergehenden Ansprüche, bei dem das Material, das sich erwärmt, wenn es einer Energiequelle (36) ausgesetzt wird, eine Dicke von weniger als 200 Mikrometer aufweist.

5. Artikel nach einem der vorhergehenden Ansprüche, bei dem das Material, das sich erwärmt, wenn es einer Energiequelle (36) ausgesetzt wird, durch Siebdruck auf die Innenfläche der Schale des Artikels aufgebracht wird oder aus einer Übertragung von einem Farbdruck oder einem Abziehbild resultiert.

6. Artikel nach einem der vorhergehenden Ansprüche, bei dem das Material, das sich erwärmt, wenn es einer Energiequelle (36) ausgesetzt wird, metallisch ist.

7. Artikel nach einem der vorhergehenden Ansprüche, bei dem das Speichermaterial für die freigesetzte Wärme (30) über dem Material angeordnet ist, das sich erwärmt, wenn es einer Energiequelle (36) ausgesetzt ist, damit das Wärmespeichermaterial (30) zwischen der Schale und dem Material liegt, das sich erwärmt, wenn es einer Energiequelle ausgesetzt ist.

8. Artikel nach einem der vorhergehenden Ansprüche, der ein Mittel zur physikalischen Trennung des Speichermaterials für die freigesetzte Wärme (30) von dem Material umfasst, das sich erwärmt, wenn es einer Energiequelle (36) ausgesetzt wird, wodurch ein direkter Kontakt zwischen den beiden Materialien verhindert wird, wobei das Mittel zur physikalischen Trennung eine Schutzhülle für das Speichermaterial für die freigesetzte Wärme ist.

9. Artikel nach einem der vorhergehenden Ansprüche, der eine Wärmebarriere umfasst, die zwischen dem Material, das sich erwärmt, wenn es einer Energiequelle (36) ausgesetzt wird, und der Schale des Artikels angeordnet ist.

10. Artikel nach einem der vorhergehenden Ansprüche, der innerhalb seines inneren Hohlraums einen Sensor zur Gewichtsmessung umfasst, der gegen Erhitzungstemperaturen beständig ist.

11. Artikel nach einem der vorhergehenden Ansprüche, der aus einer einzigen Keramikschale (27) gebildet ist und die allgemeine Form eines Blocks aufweist, wobei der Artikel vorzugsweise einen eiswürfelartigen Artikel bildet.

12. Artikel nach einem der Ansprüche 1 bis 10, der durch das Zusammenfügen von zwei komplementären und übereinanderlegbaren Keramikschalen (21,22) gebildet wird, die in ihrer übereinandergelegten Ausführung einen inneren Hohlraum (26) bilden, der das Wärmespeichermittel (32) aufnimmt, wobei die beiden Schalen (21,22) zwei periphere Versiegelungsränder (24,25) definieren, die einander gegenüberliegend angeordnet sind und sich über die Seitenwand des Artikels erstrecken, wobei sie durch einen ringförmigen Verbindungsraum voneinander getrennt sind, wobei der Artikel eine Versiegelungskrone (23) der beiden Schalen miteinander umfasst, die aus einem wärmehärtenden Material besteht und sich zwischen die Versiegelungsränder in dem ringförmigen Raum bündig mit den Außenwänden der Schalen einfügt.

13. Artikel nach Anspruch 12, **dadurch gekennzeichnet, dass** die Versiegelungskrone (23) aus Epoxidharz besteht.

14. Verfahren zur Herstellung eines einschaligen Artikels nach Anspruch 11, das die folgenden Schritte umfasst:
• Bilden der Keramikschale (27) durch Gießen des Schlickers durch eine Öffnung innerhalb einer Form der herzustellenden Form, die einen blockförmigen Hohlraum (28) bildet,
• Aushärtung des Schlickers, der mit der Formwand in Berührung kommt, während der Schlicker im Kern der Form formbar bleibt,
• nach einer vorbestimmten Zeit, die von der zu erreichenden Dicke der Schlickerschale abhängt, Entleeren des Schlickers aus dem Kern der Form, während er noch formbar geblieben ist, durch die Öffnung,
• Trocknen, Brennen der Schale und Emaillieren der Außen- und Innenwand des Schalenmantels,
• Einspritzen eines Wärmespeichermaterials (30) in zähflüssiger oder flüssiger Form durch die Öffnung (29) der Schale,
• Verschließen der Öffnung (29) mit einem Material (33), das für den Kontakt mit Lebensmitteln geeignet ist, in Form eines Harzes oder eines festen Polymerstopfens.

15. Verfahren zur Herstellung eines zweischaligen Artikels gemäß einem der Ansprüche 12 oder 13, das die folgenden Schritte umfasst:
• Herstellung, Brennen und Emaillieren von zwei Schalen (21, 22) getrennt voneinander, wobei die Schalen aus komplementärer und übereinanderlegbarer Keramik bestehen und in ihrer übereinandergelegten Ausführung einen inneren Hohlraum (26) bilden, der das Wärmespeichermittel (32) aufnimmt, wobei die beiden Schalen jeweils zwei periphere Versiegelungsränder (24, 25) definieren, die einander gegenüberliegend angeordnet sind,
• Anordnung des Wärmespeichermittels (32) an der oberen Wand einer der beiden Schalen, die dazu bestimmt ist, die Bodenwand des Hohlraums des Artikels zu bilden,
• Aufbringen eines wärmehärtenden Materials (23) in ungehärtetem Zustand in einer vorbestimmten Menge in Abhängigkeit von der Höhe des zu bildenden Versiegelungskranzes auf den peripheren Versiegelungsrand (24, 25) der Schale, die das Wärmespeichermittel trägt,
• Aufbringen des peripheren Versiegelungsrandes (25, 24) der anderen Schale auf das Versiegelungsmaterial (23) in ungehärtetem Zustand,
• Polymerisation des wärmehärtenden Materials (23) an der Umgebungsluft oder durch Trocknen, um die beiden Schalen miteinander zu versiegeln.

16. Verfahren nach Anspruch 15, bei dem, wenn das Material, das sich erwärmt, wenn es einer Energiequelle (36) ausgesetzt wird, ein Farbdruck ist, das Herstellungsverfahren einen Schritt des Brennens der Schale, auf die der Farbdruck aufgebracht wird, umfasst, der darauf abzielt, eine perfekte Haftung des Farbdrucks auf der gesamten Oberfläche der Schale zu erreichen, wobei sich der Farbdruck an die Oberfläche der Schale anpasst, und der vorzugsweise bei einer Temperatur zwischen 730°C und 280°C während einer Zeit zwischen 10 und 40 Minuten vor dem Schritt des Versiegelns der beiden Schalen miteinander durchgeführt wird.

## Claims

1. A ceramic tableware article comprising a passive thermal accumulation means (32), which means comprises a material likely to be heated up when exposed to an energy source (36), the tableware article comprising at least one ceramic shell (21, 22, 27) defining an inner cavity (26, 31) housing the thermal accumulation means (32), said shell defining an inner rim (24, 25, 29) delimiting a communication port between the inner volume of the shell and the outside of the article, the article comprising means (23, 33) for sealing the communication port consisting of a thermosetting material filling the communication port flush with the outer wall of the shell, wherein the passive thermal accumulation means (32) comprises a material (30) for storing heat released by the material heating up when exposed to an energy source (36), **characterised in that** the heat storage material (30) comprises:
- steatite or,
- a resin including a mineral filler or including steatite or,
- a gel comprising chlorides.

2. The article according to claim 1 wherein the energy source to which the material (36) is sensitive comprises microwaves, electromagnetic waves, the heat of an oven.

3. The article according to one of the preceding claims, wherein the material heating up when exposed to an energy source (36) is disposed on the upper surface (43) of the lower shell of the article constituting the bottom wall of the inner cavity.

4. The article according to one of the preceding claims, wherein the material (36) heating up when exposed to an energy source has a thickness of less than 200 microns.

5. The article according to any of the preceding claims, wherein the material heating up when exposed to an energy source (36) is applied to the inner surface of the shell of the article by screen printing, or is the result of a transfer from a chromo or decal.

6. The article according to any of the preceding claims, wherein the material which heats when exposed to an energy source (36) is metallic.

7. The article according to any of the preceding claims, wherein the heat storage material (30) is disposed above the material heating up when exposed to an energy source (36) so that the heat storage material (30) is interposed between the shell and the material heating up when exposed to an energy source.

8. The article according to one of the preceding claims, wherein it comprises means for physically separating the released heat storage material (30) from the material heating up when exposed to an energy source (36) avoiding direct contact between both materials, wherein the physical separation means is a protective envelope for the released heat storage material.

9. The article according to any of the preceding claims, comprising a thermal barrier disposed between the material heating up when exposed to an energy source (36) and the shell of the article.

10. The article according to any of the preceding claims, comprising within its inner cavity a weight-measuring sensor withstanding the heating temperatures.

11. The article according to one of the preceding claims, formed by a single ceramic shell (27) and having generally the shape of a block, said article preferably forming an article of the ice cube type.

12. The article according to one of claims 1 to 10, formed by the assembly of two said complementary and superposable ceramic shells (21, 22) forming in their superposed configuration an inner cavity (26) housing the thermal accumulation means (32), the two shells (21, 22) defining two peripheral sealing rims (24, 25) disposed facing each other and extending on the side wall of the article, being separated from each other by an annular communication space, the article comprising a ring (23) for sealing the two shells to each other, consisting of a thermosetting material, interposed between the sealing rims in the annular space flush with the outer walls of the shells.

13. The article according to claim 12, **characterised in that** the sealing ring (23) consists of epoxy resin.

14. A method for manufacturing a single-shell article in accordance with claim 11, comprising the steps of:
• forming the ceramic shell (27) by casting slurry within a mould having the shape to be produced forming a block-shaped cavity (28) through a port,
• curing the slurry in contact with the wall of the mould, while the slurry in the core of the mould remains malleable,
• after a predetermined time depending on the thickness of the slurry shell to be achieved, emptying the slurry from the core of the mould while it remains malleable, through the port,
• drying, firing the shell and enamelling the outer and inner walls of the envelope of the shell,
• injecting a thermal accumulation material (30) in viscous or liquid form through the port (29) of the shell,
• plugging the port (29) with a material (33) compatible with food contact, in the form of a resin or solid polymer plug.

15. A method for manufacturing a two-shell article in accordance with any of claims 12 or 13, comprising the steps of:
• manufacturing, firing and enamelling two shells (21, 22) separately from each other, the shells being complementary and superposable, of ceramic, forming in their superposed configuration an inner cavity (26) housing the thermal accumulation means (32), the two shells respectively defining two peripheral sealing rims (24, 25) disposed facing each other,
• disposing the thermal accumulation means (32) on the upper wall of one of the two shells, intended to form the bottom wall of the cavity of the article,
• applying, to the peripheral sealing rim (24, 25) of the shell supporting the thermal accumulation means, a thermosetting material (23) in the uncured state, in an amount predetermined as a function of the height of the sealing ring to be formed,
• applying the peripheral sealing rim (25, 24) of the other shell to the sealing material (23) in the uncured state,
• polymerising the thermosetting material (23) in ambient air or by drying to seal the two shells to each other.

16. The method according to claim 15, wherein when the material heating up when exposed to an energy source (36) is a chromo, the manufacturing method comprises a step of firing the shell to which the chromo is applied, aimed at achieving perfect adhesion of the chromo to the entire surface of said shell, the chromo embracing the surface of the shell, preferably carried out at a temperature of between 730°C and 280°C for a time of between 10 and 40 minutes, before the step of sealing the two shells to each other.
